# EUROPEAN PATENT SPECIFICATION

(11) **EP 1 906 470 B1**
(45) Date of publication and mention of the grant of the patent: **14.12.2011**
(21) Application number: 07120111.5
(22) Date of filing: 31.05.2007
(51) Int. Cl.: H01M 2/10, H01M 10/42, H01M 10/44, H01M 10/48

(54) **Cordless power tool battery charging system**
Ladesystem für eine Batterie für ein kabelloses Elektrogerät
Système de chargement pour une batterie d'outil électrique sans fil

(30) Priority: 31.05.2006 US 809955 P
(43) Date of publication of application: 02.04.2008
(62) Divisional of application: 07109337.1
(73) Proprietor: INGERSOLL-RAND COMPANY, Montvale, NJ 07645 (US)
(72) Inventor: Becker, Daniel, Monroe Township, PA 08831 (US); Ball, William M., Jr., Stockton, NJ 08559 (US); Holtzman, Gil, Harleysville, PA 19438 (US); Seith, Warren Andrew, Bethlehem, PA 18020 (US)
(74) Representative: Schwabe - Sandmair - Marx

(56) References cited:
- EP-A- 0 944 153
- EP-A- 1 128 517
- WO-A-2006/044693
- DE-A1- 4 225 088
- DE-C1- 3 340 882
- US-A- 5 144 217
- US-A- 6 075 341

## Description

### BACKGROUND OF THE INVENTION

The present invention relates to a charging system for charging batteries for cordless power tools.

Cordless power tools are well-known and provide several advantages over traditional corded power tools. One of the advantages provided by cordless power tools is the mobility and/or portability when using the tool. For example, the operator of the cordless power tool can quickly and efficiently work over a larger area without having to continually adjust the power cord. Similarly, cordless power tools can be used in areas where electrical power is not available. Because of these advantages, the popularity of cordless power tools has increased among both professional and novice power tool users.

EP 1 128 517 A2 describes adapters for rechargeable battery packs, wherein a control portion of a battery charger controls a power source circuit upon receipt of instructions from the control portion of the adapter. Based upon these instructions the adapter enables charging operations for a battery pack that does not have a memory storing charging parameters and/or information. The battery charger may be designed to charge a battery pack which it was not originally designed for. EP 0 944 153 A2 discloses a power tool charging system having a charge level indicator and charge control functions. The system allows the charge level of the batteries to be externally monitored, the charging control according to the charge/discharge level of the batteries so as to lessen the load on the batteries and an easy measurement of the temperature of the batteries so as to control charging in accordance with the measured temperature of the batteries, thereby lessening the load on the batteries. From US 6,075,341 a power pack charging system for a power tool is known comprising a one-way compatible charger arrangement for use with multiple power pack types. US 5,144,217 describes a cordless tool battery housing and charging system for a range of cordless tools. The charger assembly includes a receptacle designed to receive several different configurations of battery pack. The receptacle includes a plurality of vertical battery pack locating ribs and a terminal assembly pedestal that is disposed off centre within the receptacle. DE 42 25 088 A1 describes a battery discharging device disclosing a controlling device to regain battery capacity using depth discharge after the occurrence of a memory effect resulting in a loss of said capacity. From DE 33 40 882 C1 a device for controlling the temperature and for reconditioning of batteries built of individual electro-chemical cells is known. WO 2006/044693 A2 discloses a cordless power system comprising a battery pack. The battery pack is mated with either the cordless device to provide power to operate the cordless device or to a charger to charge the cells in the battery pack. It comprises an identification and communication system by which the battery pack identifies and communicates information about the battery pack to the cordless device or to the charger to which the battery pack is mated.

It is desired to provide an improved charging system for such batteries.

### SUMMARY OF THE INVENTION

The invention provides a cordless power tool battery charging system according to claim 1. In one or more embodiments of the invention, the charging system may be configured to accept multiple input voltages. In one or more embodiments of the invention, the charging system may be configured to charge batteries having different battery chemistries. In one or more embodiments of the invention, the charging system may be configured to charge batteries having different voltages. In one or more embodiments of the invention, the charging system is configured to charge batteries in accordance with a charging protocol stored in the battery. In one or more embodiments of the invention, the charging system may be configured to display the current charge level of a battery. In one or more embodiments of the invention, the charging system may be configured to compare a current capacity of a battery to an original capacity of a battery and, based thereon, recommend whether the battery should be renewed. In one or more embodiments of the invention, the charging system may be configured to renew a battery by deep discharging the battery and then recharging the battery.

In another aspect, the invention may provide a cordless power tool battery charging system configured to receive batteries having different housing configurations. In one or more embodiments of the invention, the charging system may include keyways configured to receive various battery key patterns. In one or more embodiments of the invention, the charging system is configured such that the battery contacts and charging system contacts are disengaged prior to removal of the battery from the charging system. In one or more embodiments of the invention, the batteries may include an onboard circuit contact on a distal end surface thereof for contact with a corresponding contact in the charging system. In one or more embodiments of the invention, the charging system may include flexible battery contacts such that the battery contacts within the charging system housing. In one or more embodiments of the invention, the charging system may include a patterned heat sink extending therein. In one or more embodiments of the invention, the charging system may include a fan mounted on a heat sink and wherein the heat sink may further include through passages aligned with the fan.

### BRIEF DESCRIPTION OF THE DRAWINGS

Fig. 1 is a perspective view of an exemplary Nickel Cadmium battery.
Fig. 2 is a perspective view of an exemplary Lithium Ion battery.
Fig. 3 is a top plan view of the battery of Fig. 2.
Fig. 4 is a perspective view of a charging system in accordance with the present invention.
Fig. 5 is a side elevation view of the charging system of Fig. 4.
Fig. 6 is a top plan view of the charging system of Fig. 4.
Fig. 7 is a top plan view similar to Fig. 6 illustrating the charging system of Fig. 4 with the housing top cover removed.
Fig. 8 is a elevational view along the line 8-8 of Fig. 7.
Fig. 9 is a top plan view of the charging system housing bottom cover.
Fig. 10 is an elevation view illustrating the placement of the charging system housing top cover relative to the housing bottom cover.
Fig. 11 is an exemplary circuit diagram of the battery of Fig. 1.
Fig. 12 is an exemplary circuit diagram of the battery of Fig. 2.
Fig. 13 is an exemplary circuit diagram of a buck circuit of the charging system of Fig. 4.
Fig. 14 is an exemplary circuit diagram of a microprocessor and LED circuit of the charging system of Fig. 4.
Fig. 15 is an exemplary circuit diagram of a flyback circuit of the charging system of Fig. 4.

### DETAILED DESCRIPTION OF THE INVENTION

Although the invention is illustrated and described herein with reference to specific embodiments, the invention is not intended to be limited to the details shown. Rather, various modifications may be made in the details without departing from the invention.

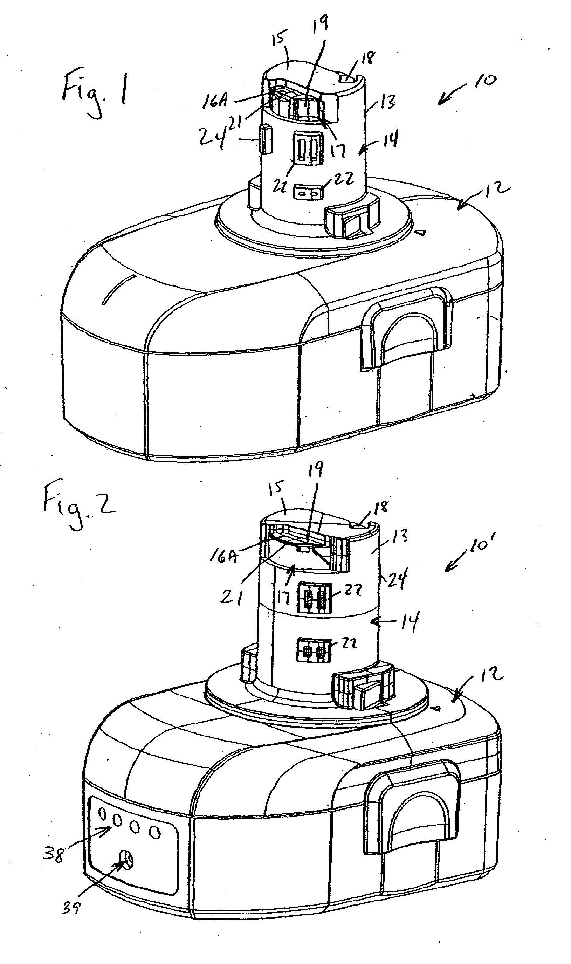

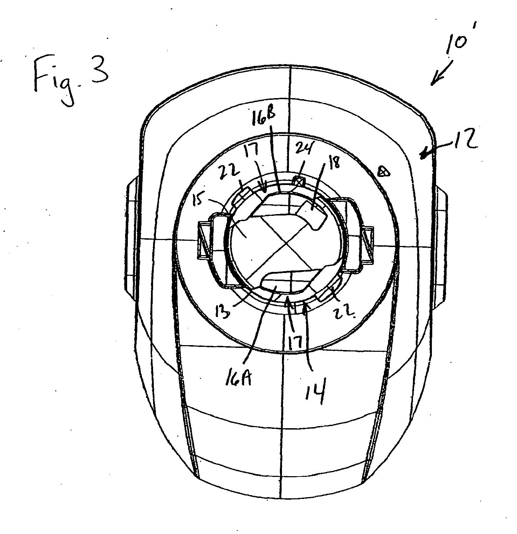

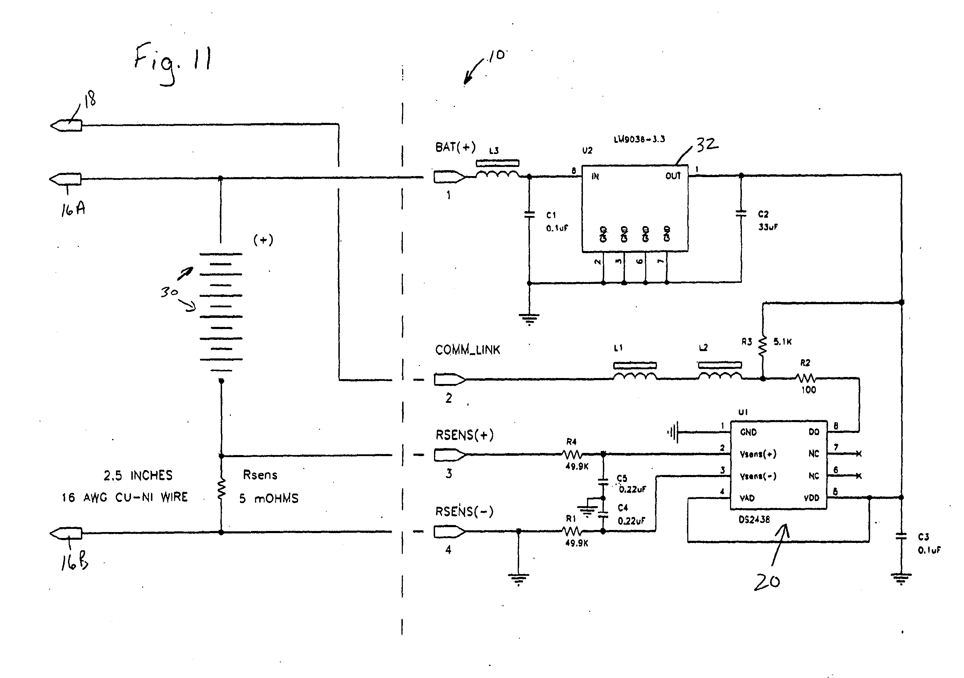

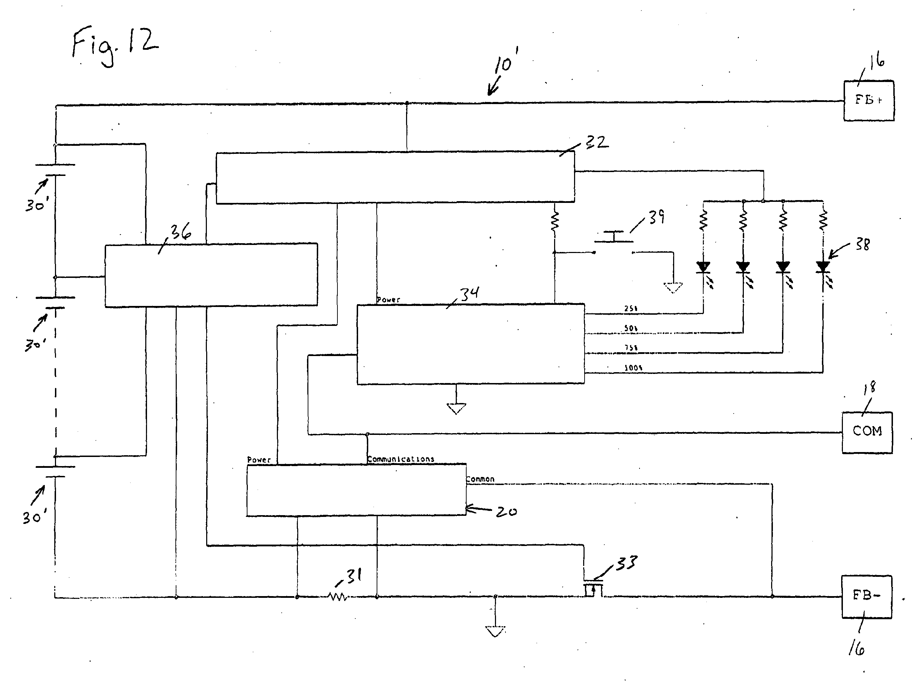

Referring to Figs. 1-3, two exemplary battery packs 10, 10' are shown. The battery pack 10 illustrated in Fig. 1 utilizes Nickel Cadmium battery cells while the battery pack 10' illustrated in Figs. 2 and 3 utilizes Lithium Ion battery cells. Exemplary circuit diagrams for both battery packs 10 and 10' are illustrated in Figs. 11 and 12, respectively.

Each battery pack 10, 10' includes a main housing 12 with a stem portion 14 extending therefrom. The main housing 12 and the stem portion 14 house the battery cells (not shown). The stem portion 14 preferably houses one or more of the battery cells. In each of the illustrated embodiments, the stem portion 14 has a cylindrical body 13 extending from the main housing 12 to an end cap 15. A pair of opposed openings 17 are provided in the body 13 adjacent to the end cap 15. The number and position of the openings 17 may be varied. The openings 17 are configured to expose the battery electrical contacts 16A and 16B which are electrically interconnected with the battery cells and the battery communication contact 18 which is electrically interconnected with the battery onboard circuit 20.

Referring to Figs. 1-3, each battery pack 10 and 10' includes various support keys 22 and alignment keys 24 extending radially outward from the stem portion body 13. The support keys 22 are configured to align with and rotatably engage support keyways in various portable tools. The support keys 22 and the alignment keys 24 can be arranged in various configurations, including different widths, heights, positions, numbers and the like. In the preferred embodiment, the configuration of the support keys 22 and alignment key 24 are configured such that the battery pack 10, 10' is properly aligned with the power tool or charging system 50, as will be described hereinafter, such that the proper polarity of the contacts 16A and 16B is maintained.

In the preferred embodiment, each specific support key 22 and alignment key 24 configuration corresponds to a battery pack 10, 10' having a specific voltage such that the battery pack 10, 10' is useable only in power tools requiring such voltage and having corresponding keyways to receive the battery pack 10, 10'. Since the configuration of the keys 22 and the alignment keyway 24 are distinct for each voltage, the different voltage battery packs would not be capable of inadvertent use with the wrong tool.

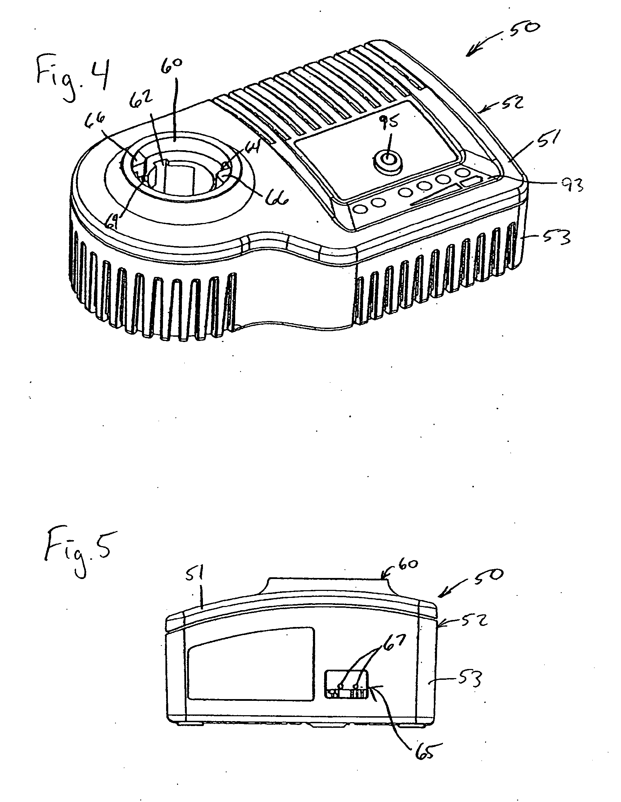

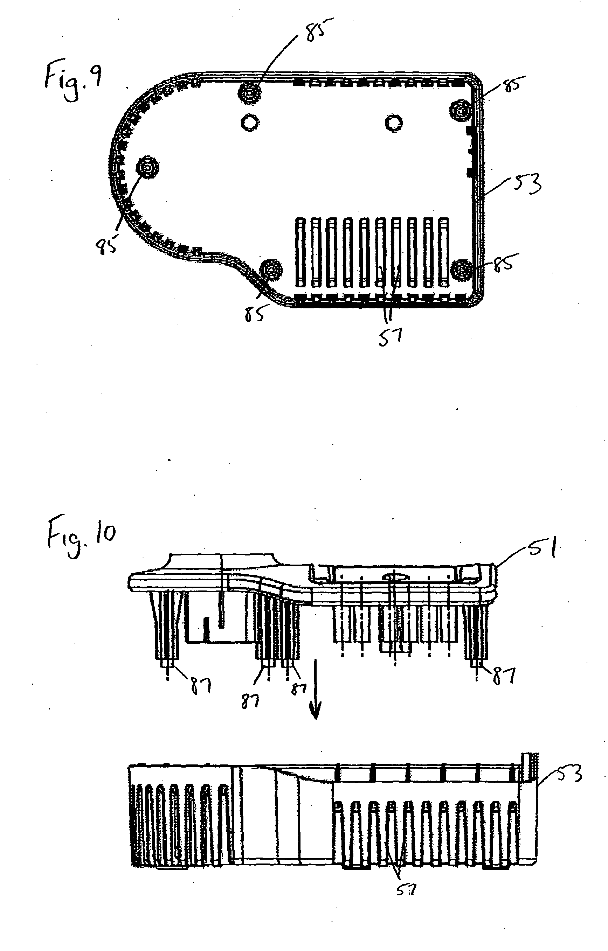

Referring to Figs. 4-10, a preferred embodiment of the charging system 50 will be described. The charging system 50 generally includes a housing 52 comprising a top cover 51 and a bottom cover 53. A battery stem receiving opening 60 is defined through the top cover 51. The opening 60 includes one or more support key keyways 62 and one or more alignment key keyways 64. The keyways 62 and 64 are configured to receive various configurations of battery pack support keys 22 and alignment keys 24, such that the charging system 50 provides a universal charger for various battery voltages. For example, the support key keyways 62 are typically wider than most, if not all of the support keys 22, such that, relative to other voltage key configurations, the keys 22 can be moved circumferentially and still align with the keyways 62. Stops 66 are preferably provided within the opening 60 such that the battery pack stem 14 can only be rotated a given amount within the opening 60.

To further facilitate universal usage of the charging system 50, the charging system 50 preferably includes a plug port 65 with male pins 67 configured to mate with the female plug of cords (not shown) useable with different input voltages. As illustrated in the circuit diagrams, the male pins 67 are associated with a voltage converter which allows the charging system to be utilized with different input voltages.

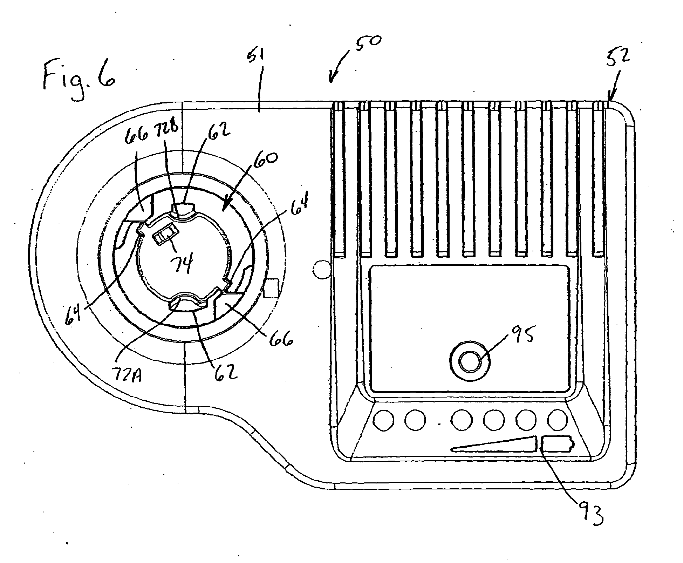

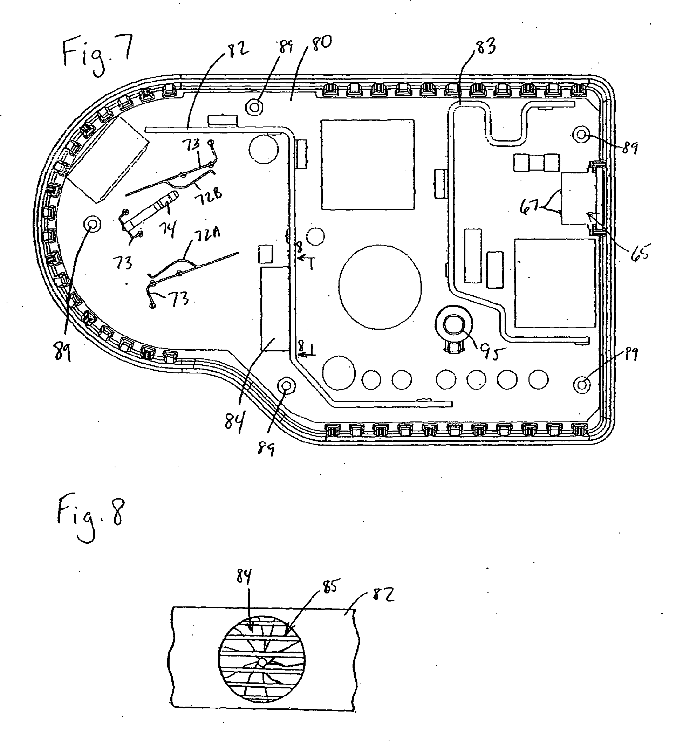

Referring to Figs. 6 and 7, the charging system 50 includes a pair of opposed electrical contacts 72A and 72B configured to electrically connect with the battery pack contacts 16A and 16B. Again, the configuration of the support keys 22 and alignment key 24 and the keyways 62 and 64 are configured such that the battery pack 10, 10' is properly aligned with the charging system 50 such that the proper polarity of the contacts 16A and 16B is maintained.

Each electrical contact 16A, 16B preferably includes a radially tapered portion 19 extending to an arcuate portion 21. The tapered portions 19 are configured to first contact the charger contacts 72A and 72B during rotation of the battery pack 10, 10' relative to the charging system 50 such that the charger contacts 72A, 72B ride along the tapered portions 19 and into final engagement with the arcuate portion 21. The tapered portion 19 may be made from conductive material, or alternatively, may be a non-conductive material. In the initially inserted position, prior to rotation into electrical contact, the battery pack contacts 16A and 16B are circumferentially offset from and thereby disengaged from the charger contacts 72A and 72B. As such, during axial movement of the battery pack stem 14 into the opening 60, the contacts 16A, 16B and 72A, 72B do not interfere with each other or apply any load upon each other.

A communication contact 74 extends from the circuit board 80 within the charging system 50 and is configured to engage the battery communication contact 18. Electrical connection between the battery communication contact 18 and the communication contact 74 provides a digital link between the onboard circuit 20 in the battery pack 10, 10' and a microprocessor 90 or the like in the charging system 50. An exemplary onboard circuit 20 is the DS2438 manufactured by Dallas Semiconductor. The functions of the onboard circuit 20 and the microprocessor 90 will be described hereinafter.

Referring to Figs. 11 and 12, exemplary circuit diagrams of the batteries 10, 10' of Figs. 1 and 2, respectively, are shown. Each of the batteries 10, 10' includes a plurality of battery cells 30, 30'. The battery cells 30, 30' are connected with the battery contacts 16A and 16B and are also connected with the onboard circuit 20. A voltage regulator 32, which shuts down the battery when an over discharge is detected, is preferably provided in the battery circuit. A suitable voltage regulator 32 is a model number LM9036-3.3 available from National Semiconductor. Each battery 10, 10' includes a communication link between the onboard circuit 20 and the battery communication contact 18. In the battery circuit of Fig. 12, a voltage sensor 36 is also provided to prevent over discharging. A suitable voltage sensor 36 is a model number S-8242AAMB6T1GZ available from Seiko Instruments. The battery circuit of Fig. 12 also includes a microprocessor 34 which controls operation of the battery 10'. A suitable microprocessor is a model number UPD78F9212GR available from NEC Electronics. A series of fuel gauge lights 38 are connected to the microprocessor 34 and may be actuated using a push button 39 or the like to show the current fuel level directly on the battery 10'. The battery circuit of Fig. 12 also includes a current sense resistor 31 and a MOFSET switch 33 which facilitates disabling of power in the battery 10'. A suitable MOFSET switch is a model number NP88N03KDG available from NEC Electronics.

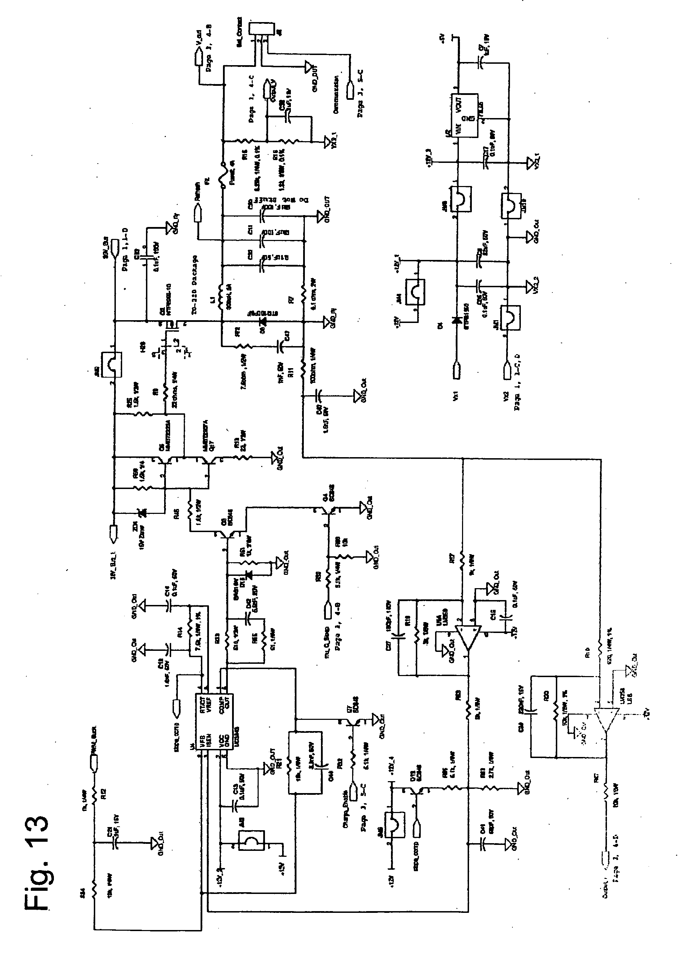

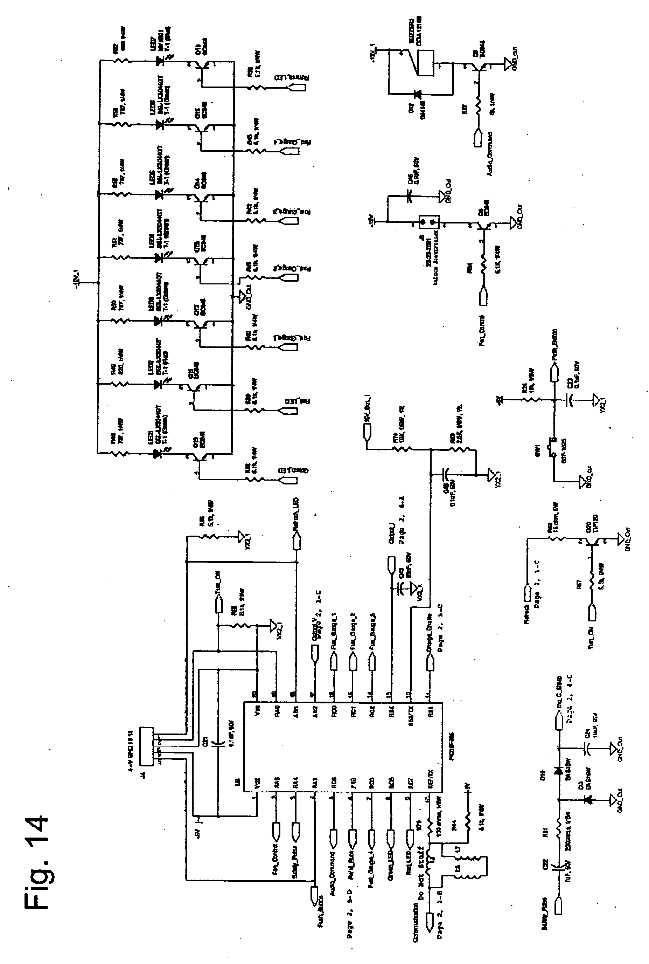

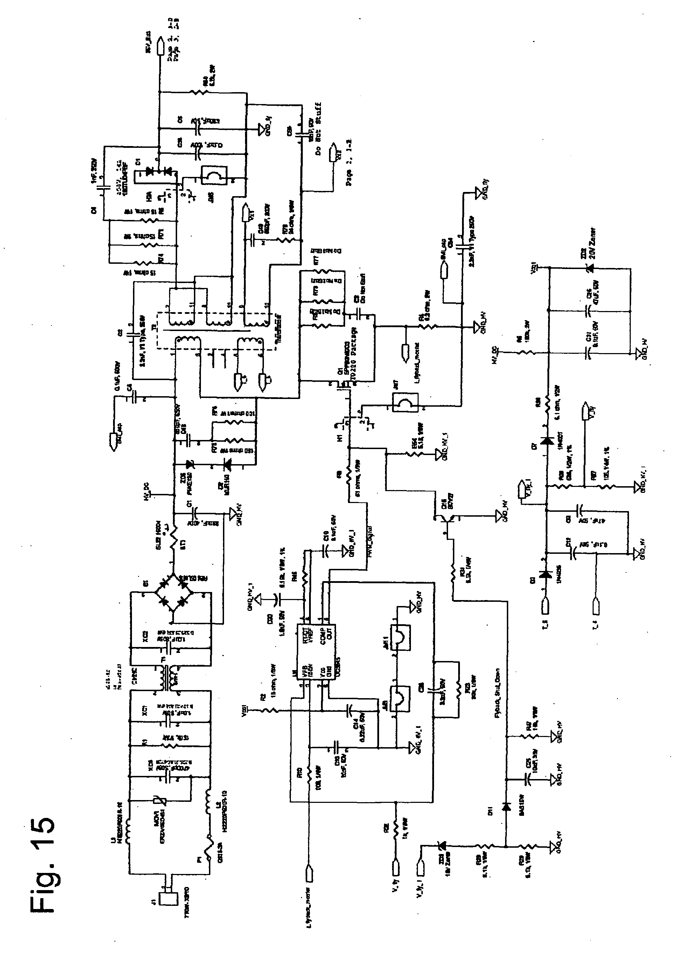

Referring to Fig. 7, the various components of the charging system 50 are mounted on a circuit board 80. Figs. 13-15 are exemplary circuit diagrams of various portions of the charging system 50 and illustrate various components used therein. Mechanical structures are also mounted on the circuit board 80. A pair of heat sinks 82 and 83 are mounted on the board 80 and are configured to remove heat from the electrical components. Each heat sink 82, 83 has a non-linear configuration to maximize the area of heat absorption surface. In the preferred embodiment, to further facilitate cooling, a fan 84 or the like is mounted onto heat sink 82. Referring to Fig. 8, a slotted vent structure 85 may be provided on the heat sink 82 in alignment with the fan 84 to draw or push air across the heat sink 82 to enhance cooling. The housing 52 also has various vent slots 57.

The charger contacts 72A and 72B and the communication contact 74 are each preferably mounted on the circuit board 80 via flexible mounts 73 such that when the top cover 51 is positioned relative to the bottom cover 53, the contacts 72A, 72B and 74 may flex and align with the appropriate areas within the opening 60. Referring to Figs. 7, 9 and 10, in the preferred embodiment, the circuit board 80 is supported on supports 85 within the bottom cover 53. The circuit board 80 preferably is not initially secured to the bottom cover 53 and is slightly adjustable relative thereto. The top cover 51 is placed onto the bottom cover 53, and feet 87 depending therefrom pass through holes 89 in the circuit board 80 such that the feet 87 engage the supports 85. Screws or the like are utilized to secure the feet 87 to the supports 85 and the circuit board 80 is maintained therebetween. The alignability of the circuit board 80 and the flexibility of the contacts 72A, 72B and 74 allows the charging system 50 to be easily assembled.

The battery onboard circuit 20 and the microprocessor 90 communicate with one another to facilitate various charging functions as herein described. The various components utilized in carrying out these functions are illustrated in the various circuit diagrams in Figs. 11-15. For example, the onboard circuit 20 preferably contains identifying indicia relating to the battery chemistry (i.e. NiCad vs. Lithium Ion), the battery voltage, the battery capacity and the like. This information is communicated to the microprocessor 90 to inform the charging system 50 the type of battery pack 10, 10' that has been placed in the charging system 50. The exchange of information occurs upon contact between the contacts 18 and 74. The onboard circuit 20 is independent of the stored charge within the battery pack 10, 10' and therefore the battery pack 10, 10' will be recognized by the charging system 50 even if the battery pack 10, 10' is completely drained. In the preferred embodiment, the onboard circuit 20 has stored in its memory a charging protocol specific to the battery pack 10, 10'. In another aspect of the invention, the onboard circuit 20 may be configured to store data related to the battery pack 10, 10', for example, a counter of the number of charges, a history of discharge and charge cycles, a history of battery renewing and the like.

Since the battery onboard circuit 20 provides the microprocessor 90 with specific information relating to the battery pack 10, 10', preferably including the charging protocol, the microprocessor 90 can regulate the voltage output and the like such that the charging system 50 can charge batteries 10, 10' having different battery chemistries or having different voltages. The microprocessor 90 is preferably configured to receive and display the current charge level of the battery pack 10, 10'. In this regard, the charging system 50 includes a charge level indicator 93 which may include a series of LEDs or the like. In the preferred embodiment, the microprocessor 90 is further configured to compare a current capacity of a battery pack 10, 10' to an original capacity of a battery pack 10, 10' (which is preferably stored in the memory of the onboard circuit 20) and, based thereon, recommend whether the battery pack 10, 10' should be renewed. To renew the battery pack 10, 10', a user depresses the renew button 95 to start a renewing cycle. Upon depression of the renew button 95, the microprocessor 90 is configured to initiate a deep discharge of the battery pack 10, 10' and then recharge the battery pack 10, 10'. The discharge button 95 may be configured to light up upon detection of a condition in which a renew is recommend. Alternatively, the microprocessor may be configured to automatically renew the battery pack 10, 10' upon detection of such a condition.

While preferred embodiments of the invention have been shown and described herein, it will be understood that such embodiments are provided by way of example only.

## Claims

1. A cordless power tool battery charging system (50) comprising:
a charger housing (12) having a battery receiving opening (60); and
a charging circuit configured to charge a battery (10; 10') engaged within the battery receiving opening (60), the charging circuit configured to charge in accordance with various charging protocols in dependence on the battery (10; 10') engaged within the battery receiving opening (60), wherein
the battery receiving opening (60) has at least one charging system contact (72A; 72B) therein and the opening (60) is configured such that a battery (10; 10') may be fully received within the battery receiving opening (60) without contacting the at least one charging system contact (72A; 72B), the battery (10; 10') requiring a secondary motion to engage a battery contact (16A; 16B) with the corresponding charging system contact (72A; 72B).

2. A cordless power tool battery charging system (50) according to claim 1 further comprising a voltage converter such that the charging system (50) is configured for connection to at least two different input voltage sources.

3. A cordless power tool battery charging system (50) according to any of the preceding claims wherein the charging protocol is based on the battery chemistry, the battery voltage, or a combination thereof.

4. A cordless power tool battery charging system (50) according to any of the preceding claims wherein the charging system (50) is configured to charge the battery (10, 10') in accordance with a charging protocol stored in the battery (10, 10').

5. A cordless power tool battery charging system (50) according to any of the preceding claims wherein the charging system (50) is configured to display a present charge level of an engaged battery (10, 10').

6. A cordless power tool battery charging system (50) according to any of the preceding claims wherein the charging system (50) is configured to compare a current capacity of an engaged battery (10, 10') to an original capacity of the battery (10, 10') and, based thereon, recommend whether the battery (10, 10') should be renewed.

7. A cordless power tool battery charging system (50) according to any of the preceding claims wherein the charging system (50) is configured to renew the engaged battery (10, 10') by deep discharging the battery (10, 10') and then recharging the battery (10, 10').

8. A cordless power tool battery charging system (50) according to the preceding claim wherein the charging system (50) is configured to automatically renew an engaged battery (10, 10') upon detection of a renew condition wherein a current capacity of the engaged battery (10, 10') is below a predetermined threshold compared to an original capacity of the battery (10, 10').

9. A cordless power tool battery charging system (50) according to any of the preceding claims wherein the battery receiving opening (60) is configured to receive batteries (10, 10') having different housing configurations.

10. A cordless power tool battery charging system (50) according to any of the preceding claims further comprising a patterned heat sink (82) extending about a portion of the charging circuit.

11. A cordless power tool battery charging system (50) according to the preceding claim wherein a fan (84) is mounted on the heat sink (82) and the heat sink (82) includes through passages aligned with the fan (84).

12. A cordless power tool battery charging system(50) according to any of the preceding claims wherein the battery receiving opening (60) includes at least one keyway (62; 64) configured two receive at least two distinct battery key patterns (22; 24).

## Patentansprüche

1. Ein kabelloses Elektrowerkzeugbatterieladesystem (50), umfassend:
ein Ladergehäuse (12) mit einer Batterieaufnahmeöffnung (60), und
einen Ladestromkreis konfiguriert um eine Batterie (10; 10'), die innerhalb der Batterieaufnahmeöffnung (60) eingelegt ist, zu laden, wobei der Ladestromkreis konfiguriert ist in Übereinstimmung mit verschiedenen Ladeprotokollen in Anhängigkeit von der innerhalb der Batterieaufnahmeöffnung (60) eingelegten Batterie (10; 10') zu laden, wobei
die Batterieaufnahmeöffnung (60) in sich wenigstens einen Ladesystemkontakt (72A; 72B) hat und die Öffnung (60) so konfiguriert ist, dass eine Batterie (19; 10') vollständig innerhalb der Batterieaufnahmeöffnung (60) aufgenommen sein kann ohne den wenigstens einen Ladesystemkontakt (72A; 72B) zu berühren und die Batterie (10; 10') eine Sekundärbewegung benötigt, um einen Batteriekontakt (16A; 16B) mit dem entsprechenden Ladesystemkontakt (72A; 72B) zu verbinden.

2. Ein kabelloses Elektrowerkzeugbatterieladesystem (50) gemäß Anspruch 1 weiterhin umfassend einen Spannungswandler, so dass das Ladesystem (50) so konfiguriert ist, dass es mit wenigstens zwei verschiedenen Eingangsspannungsquellen verbindbar ist.

3. Ein kabelloses Elektrowerkzeugbatterieladesystem (50) nach einem der vorgehenden Ansprüche, wobei das Ladeprotokoll auf der Batteriechemie, der Batteriespannung oder einer Kombination daraus basiert.

4. Ein kabelloses Elektrowerkzeugbatterieladesystem (50) nach einem der vorgehenden Ansprüche, wobei das Ladesystem (50) konfiguriert ist um die Batterie (10; 10') in Übereinstimmung mit einem in der Batterie (10; 10') gespeicherten Ladungsprotokoll zu laden.

5. Ein kabelloses Elektrowerkzeugbatterieladesystem (50) nach einem der vorgehenden Ansprüche, wobei das Ladesystem (50) konfiguriert ist einen gegenwärtigen Ladezustand einer eingelegten Batterie (10; 10') anzuzeigen.

6. Ein kabelloses Elektrowerkzeugbatterieladesystem (50) nach einem der vorgehenden Ansprüche, wobei das Ladesystem (50) konfiguriert ist eine aktuelle Kapazität einer eingelegten Batterie (10; 10') mit der ursprünglichen Kapazität der Batterie (10; 10') zu vergleichen und basierend darauf ein Empfehlung auszugeben, ob die Batterie (10; 10') gewechselt werden soll.

7. Ein kabelloses Elektrowerkzeugbatterieladesystem (50) nach einem der vorgehenden Ansprüche, wobei das Ladesystem (50) konfiguriert ist die eingelegte Batterie (10; 10') zu erneuern, in dem es die Batterie (10; 10') tiefenentlädt und die Batterie (10; 10') danach wieder auflädt.

8. Ein kabelloses Elektrowerkzeugbatterieladesystem (50) nach dem vorgehenden Anspruch, wobei das Ladesystem (50) konfiguriert ist eine eingelegte Batterie (10; 10') automatisch aufzufrischen, wenn ein Erneuerungszustand entdeckt wird, bei dem eine gegenwärtiges Kapazität der eingelegten Batterie (10; 10') im Vergleich zu der ursprünglichen Kapazität der Batterie (10; 10') unter einem vorgegebenen Grenzwert liegt.

9. Ein kabelloses Elektrowerkzeugbatterieladesystem (50) nach einem der vorgehenden Ansprüche, wobei die Batterieaufnahmeöffnung (60) so gestaltet ist, dass sie Batterien (10; 10') mit unterschiedlichen Gehäusegestaltungen aufnehmen kann.

10. Ein kabelloses Elektrowerkzeugbatterieladesystem (50) nach einem der vorgehenden Ansprüche weiterhin umfassend ein dessiniertes (patterned) Kühlblech (82) aufweist, das sich über einen Teil des Ladekreises erstreckt.

11. Ein kabelloses Elektrowerkzeugbatterieladesystem (50) nach dem vorgehenden Anspruch, wobei ein Gebläse (84) an dem Kühlblech (82) befestigt ist und das Kühlblech (82) Durchgänge aufweist, die mit dem Gebläse (84) fluchten.

12. Ein kabelloses Elektrowerkzeugbatterieladesystem (50) nach einem der vorgehenden Ansprüche, wobei die Batterieaufnahmeöffnung (6) wenigstens eine Schlüsselnut (62; 64) beinhaltet, die so ausgebildet ist, dass sie wenigstens zwei unterschiedliche Schlüsselprofile (22; 24) aufnehmen kann.

## Revendications

1. Système de charge de batterie d'outil de puissance sans fil (50) comprenant :
un boîtier de chargeur (12) possédant une ouverture de réception de batterie (60) ; et
un circuit de charge configuré pour charger une batterie (10 ; 10') engagée à l'intérieur de l'ouverture de réception de batterie (60), le circuit de charge étant configuré pour charger conformément à divers protocoles de charge dépendant de la batterie (10 ; 10') engagé à l'intérieur de l'ouverture de réception de batterie (60),
l'ouverture de réception de batterie (60) possédant à l'intérieur au moins un contact de système de charge (72A ; 72B) et l'ouverture (60) étant configurée de telle sorte qu'une batterie (10 ; 10') peut être entièrement reçue à l'intérieur de l'ouverture de réception de batterie (60) sans venir en contact avec au moins un contact de système de charge (72A; 72B), la batterie (10 ; 10') nécessitant un déplacement supplémentaire pour engager un contact de batterie (16A ; 16B) avec le contact de système de charge (72A ; 72B) correspondant.

2. Système de charge de batterie d'outil de puissance sans fil (50) selon la revendication 1 comprenant en outre un convertisseur de tension de sorte que le système de charge (50) est configuré pour le raccordement à au moins deux sources de tension d'entrée différentes.

3. Système de charge de batterie d'outil de puissance sans fil (50) selon l'une quelconque des revendications précédentes, dans lequel le protocole de charge repose sur la chimie de la batterie, la tension de la batterie, ou une combinaison de celles-ci.

4. Système de charge de batterie d'outil de puissance sans fil (50) selon l'une quelconque des revendications précédentes, dans lequel le système de charge (50) est configuré pour charger la batterie (10, 10') conformément à un protocole de charge en mémoire dans la batterie (10, 10').

5. Système de charge de batterie d'outil de puissance sans fil (50) selon l'une quelconque des revendications précédentes, dans lequel le système de charge (50) est configuré pour afficher un niveau de charge actuel d'une batterie engagée (10, 10').

6. Système de charge de batterie d'outil de puissance sans fil (50) selon l'une quelconque des revendications précédentes, dans lequel le système de charge (50) est configuré pour comparer une capacité actuelle de batterie engagée (10, 10') à une capacité de départ de la batterie (10, 10') et, à partir de là, pour recommander le remplacement éventuel de la batterie (10, 10').

7. Système de charge de batterie d'outil de puissance sans fil (50) selon l'une quelconque des revendications précédentes, dans lequel le système de charge (50) est configuré pour renouveler la batterie engagée (10, 10') en déchargeant complètement la batterie (10, 10') puis en rechargeant la batterie (10, 10').

8. Système de charge de batterie d'outil de puissance sans fil (50) selon la revendication précédente, dans lequel le système de charge (50) est configuré pour renouveler automatiquement une batterie engagée (10, 10') lors de la détection d'un état de renouvellement dans lequel la capacité actuelle de la batterie engagée (10, 10') est au-dessous d'un seuil prédéterminé comparé à une capacité de départ de la batterie (10, 10').

9. Système de charge de batterie d'outil de puissance sans fil (50) selon l'une quelconque des revendications précédentes, dans lequel l'ouverture de réception de batterie (60) est configurée pour recevoir des batteries (10, 10') ayant différentes configurations de boîtier.

10. Système de charge de batterie d'outil de puissance sans fil (50) selon l'une quelconque des revendications précédentes, comprenant en outre un radiateur profilé (82) s'étendant autour d'une portion du circuit de charge.

11. Système de charge de batterie d'outil de puissance sans fil (50) selon la revendication précédente, dans lequel un ventilateur (84) est monté sur le radiateur (82) et le radiateur (82) inclut des passages traversants alignés avec le ventilateur (84).

12. Système de charge de batterie d'outil de puissance sans fil (50) selon l'une quelconque des revendications précédentes, dans lequel l'ouverture de réception de batterie (60) inclut au moins une rainure de clavette (62 ; 64) configurée pour recevoir au moins deux modèles de clavette de batterie distincts (22 ; 24).
